# EUROPEAN PATENT APPLICATION

(11) **EP 4 420 919 A1**
(43) Date of publication of application: **28.08.2024**
(21) Application number: 22882589.9
(22) Date of filing: 26.09.2022
(51) Int. Cl.: B60L 15/20

(54) **MOTOR TORQUE CONTROL METHOD AND APPARATUS, STORAGE MEDIUM AND MOTOR CONTROLLER**

(30) Priority: 18.10.2021 CN 202111210791
(71) Applicant: Great Wall Motor Company Limited, Baoding, Hebei 071000 (CN)
(72) Inventor: CHENG, Lipin, Baoding, Hebei 071000 (CN); FENG, Xiaogang, Baoding, Hebei 071000 (CN)
(74) Representative: Klunker IP Patentanwälte PartG mbB
(86) International application number: PCT/CN2022/121249
(87) International publication number: WO 2023/065978

(57) **Abstract**

The present application discloses a motor torque control method and apparatus, a storage medium and a motor controller. The method comprises: obtaining driving parameters of a vehicle and determining the working condition of the vehicle according to the driving parameters; when determined that the working condition indicates that the vehicle passes through an uneven road surface, obtaining a reference rotational speed, an available maximum torque, and an available minimum torque of a motor corresponding to the driving parameters; on the basis of the actual rotational speed and the motor reference rotational speed, determining an upper limit rotational speed mode coefficient and a lower limit rotational speed mode coefficient; calculating the product of the upper limit rotational speed mode coefficient and the available maximum torque to obtain a target available maximum torque; calculating the product of the lower limit rotational speed mode coefficient and the available minimum torque to obtain a target available minimum torque; and adjusting the output torque of the motor, so that the output torque is greater than the target available minimum torque and smaller than the target available maximum torque. Therefore, torque fluctuation of the motor may be effectively eliminated, and the mechanical structure connected to the motor can be prevented from producing an abnormal noise, ensuring that a new energy vehicle does not produce an abnormal noise when passing through uneven road surfaces.

## Description

### CROSS REFERENCE TO RELATED APPLICATION

This application claims the priority of the Chinese patent application No. 202111210791.7 titled "MOTOR TORQUE CONTROL METHOD AND APPARATUS, STORAGE MEDIUM AND MOTOR CONTROLLER" filed in China National Intellectual Property Administration on October 18, 2021, which is incorporated herein by reference in their entirety.

### TECHNICAL FIELD

The present application relates to the field of new energy vehicles, and in particular to a motor torque control method, an apparatus, a storage medium and a motor controller.

### BACKGROUND

With the promotion of new energy vehicles, more and more users choose to buy new energy vehicles. The new energy vehicle can be simply understood as a vehicle that uses a motor to drive the wheels to rotate. Since the motor and the wheels are directly connected, when the new energy vehicle travels through the uneven road surface (such as a speed bump), the mechanical structure inside the vehicle will produce abnormal noises, which will reduce the user's riding experience.

Therefore, how to avoid abnormal noises when the new new energy vehicle travels through the uneven road surface has become an urgent problem in the field of new energy vehicles.

### SUMMARY

The applicant found that when a new energy vehicle is traveling on an uneven road surface, the wheels will leave the ground due to bumps, resulting in a reduction of the load on the motor (the wheels leave the ground, and the friction force decreases), and the motor rotational speed will change differently, resulting in obvious torque fluctuations, and abnormal noises from the mechanical structure connected to the motor (such as a gearbox, a limiting block, etc.). Therefore, the torque fluctuation of the motor is eliminated, which avoids abnormal noises from the mechanical structure connected to the motor.

The present application provides a motor torque control method, an apparatus, a storage medium and a motor controller, which avoid abnormal noises when a new energy vehicle travels on the uneven road surface, and improve the riding experience of users.

In order to achieve the above objective, the application provides the following technical solutions.

A motor torque control method is provided, including:
obtaining a driving parameter of a vehicle, and determining a working condition of the vehicle based on the driving parameter, where the driving parameter includes an actual rotational speed of a motor;
obtaining a reference rotational speed, an available maximum torque and an available minimum torque of the motor corresponding to the driving parameter when the working condition is determined to indicate that the vehicle passes through an uneven road surface;
determining an upper limit rotational speed mode coefficient and an lower limit rotational speed mode coefficient based on the actual rotational speed and the reference rotational speed of the motor;
calculating a product of the upper limit rotational speed mode coefficient and the available maximum torque to obtain a target available maximum torque;
calculating a product of the lower limit rotational speed mode coefficient and the available minimum torque to obtain a target available minimum torque ; and
adjusting an output torque of the motor, so that the output torque is greater than the target available minimum torque and less than the target available maximum torque.

Optionally, the driving parameter further includes a vehicle speed, a change in road slope per unit time, an accelerator depth, a brake pedal depth, and a steering wheel angle, the working condition includes a first working condition and a second working condition, the first working condition is configured to indicate that the vehicle accelerates through an uneven road surface, and the second working condition is configured to indicate that the vehicle decelerates through an uneven road surface, and
the determining the working condition of the vehicle based on the driving parameter includes:
determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or
determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

Optionally, the reference rotational speed of the motor includes an upper limit reference rotational speed and a lower limit reference rotational speed, and
the obtaining the reference rotational speed, the available maximum torque and the available minimum torque of the motor corresponding to the driving parameter when the working condition is determined to indicate that the vehicle passes through an uneven road surface, includes:
obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or
obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

Optionally, the determining the upper limit rotational speed mode coefficient and the lower limit rotational speed mode coefficient based on the actual rotational speed and the reference rotational speed of the motor includes:
calculating a ratio of the upper limit reference rotational speed to the actual rotational speed to obtain a first numerical value when the working condition is determined as the first working condition;
selecting a minimum value from the first numerical value and a first preset numerical value as an upper limit rotational speed sliding mode ratio; and
obtaining an upper limit rotational speed mode coefficient corresponding to the upper limit rotational speed sliding mode ratio by querying from a first data table, and identifying a second preset numerical value as the lower limit rotational speed mode coefficient.

Optionally, the determining the upper limit rotational speed mode coefficient and the lower limit rotational speed mode coefficient based on the actual rotational speed and the reference rotational speed of the motor includes:
calculating a ratio of the lower limit reference rotational speed to the actual rotational speed to obtain a second numerical value when the working condition is determined as the second working condition;
selecting a minimum value from the second numerical value and a third preset numerical value as a lower limit rotational speed sliding mode ratio; and
obtaining a lower limit rotational speed mode coefficient corresponding to the lower limit rotational speed sliding mode rate by querying from the second data table, and identifying a fourth preset numerical value as the upper limit rotational speed mode coefficient.

A motor torque control apparatus is provided, including:
a working condition determination unit configured for obtaining a driving parameter of a vehicle, and determining a working condition of the vehicle based on the driving parameter, wherein the driving parameter include an actual rotational speed of a motor;
a parameter obtaining unit configured to obtaining a reference rotational speed, an available maximum torque and an available minimum torque of the motor corresponding to the driving parameter when the working condition is determined to indicate that the vehicle passes through an uneven road surface;
a coefficient determination unit configured for determining an upper limit rotational speed mode coefficient and an lower limit rotational speed mode coefficient based on the actual rotational speed and the reference rotational speed of the motor;
a first calculation unit configured for calculating a product of the upper limit rotational speed mode coefficient and the available maximum torque to obtain a target available maximum torque;
a second calculation unit configured for calculating a product of the lower limit rotational speed mode coefficient and the available minimum torque to obtain a target available minimum torque ; and
a torque adjustment unit configured for adjusting an output torque of the motor so that the output torque is greater than the target available minimum torque and less than the target available maximum torque.

Optionally, the driving parameter further includes a vehicle speed, a change in road slope per unit time, an accelerator depth, a brake pedal depth, and a steering wheel angle, the working condition includes a first working condition and a second working condition, the first working condition is configured to indicate that the vehicle accelerates through an uneven road surface, and the second working condition is configured to indicate that the vehicle decelerates through an uneven road surface, and
the working condition determination unit is further configured for:
determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or
determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

Optionally, the reference rotational speed of the motor includes an upper limit reference rotational speed and a lower limit reference rotational speed, and
the parameter obtaining unit is further configured for:
obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or
obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

A computer-readable storage medium is provided, the computer-readable storage medium includes a stored program, and the program implements the motor torque control method.

A motor controller is provided, which includes a processor, a memory and a bus, and the processor is connected to the memory through the bus.

The memory is configured for storing a program, and the processor is configured for running the program, and the program implements the motor torque control method when run.

In the technical solution provided in the application, the driving parameter of the vehicle is obtained, and the working condition of the vehicle is determined based on the driving parameter. When the working condition of the vehicle is determined to indicate that the vehicle passes through an uneven road surface, the reference rotational speed, the available maximum torque and the available minimum torque of the motor corresponding to the driving parameter are obtained. The upper limit rotational speed mode coefficient and the lower limit rotational speed mode coefficient are determined based on the actual speed and the reference rotational speed of the motor. The product of the upper limit rotational speed mode coefficient and the available maximum torque is calculated to obtain the target available maximum torque. The product of the lower limit rotational speed mode coefficient and the available minimum torque is calculated to obtain the target available minimum torque. The output torque of the motor is adjusted, so that the output torque is greater than the target available minimum torque and less than the target available maximum torque. When the working condition of the vehicle is determined to indicate that the vehicle passes through an uneven road surface, the output torque of the motor is adjusted, so that the output torque is greater than the target available minimum torque and less than the target available maximum torque. It can be seen that the solution in this embodiment can effectively avoid abnormal noises when the new energy vehicle travels through an uneven road surface, and improve the riding experience of users.

### BRIEF DESCRIPTION OF THE DRAWINGS

In order to more clearly illustrate the technical solutions of the embodiments of the present disclosure or the prior art, the figures that are required to describe the embodiments or the prior art may be briefly introduced below. Apparently, the figures that are described below are embodiments of the present disclosure, and a person skilled in the art can obtain other figures according to these figures without paying creative work.
FIG. 1 is a schematic flowchart of a motor torque control method provided in an embodiment of the present disclosure;
FIG. 2 is a schematic flowchart of another motor torque control method provided in the embodiment of the present disclosure;
Fig. 3 is a schematic structural diagram of a motor torque control apparatus provided in an embodiment of the present disclosure.

### DETAILED DESCRIPTION OF THE EMBODIMENTS

In order to make the objects, the technical solutions and the advantages of the embodiments of the present disclosure clearer, the technical solutions of the embodiments of the present disclosure may be clearly and completely described below with reference to the drawings of the embodiments of the present disclosure. Apparently, the described embodiments are merely certain embodiments of the present disclosure, rather than all of the embodiments. All of the other embodiments that a person skilled in the art obtains on the basis of the embodiments of the present disclosure without paying creative work fall within the protection scope of the present disclosure.

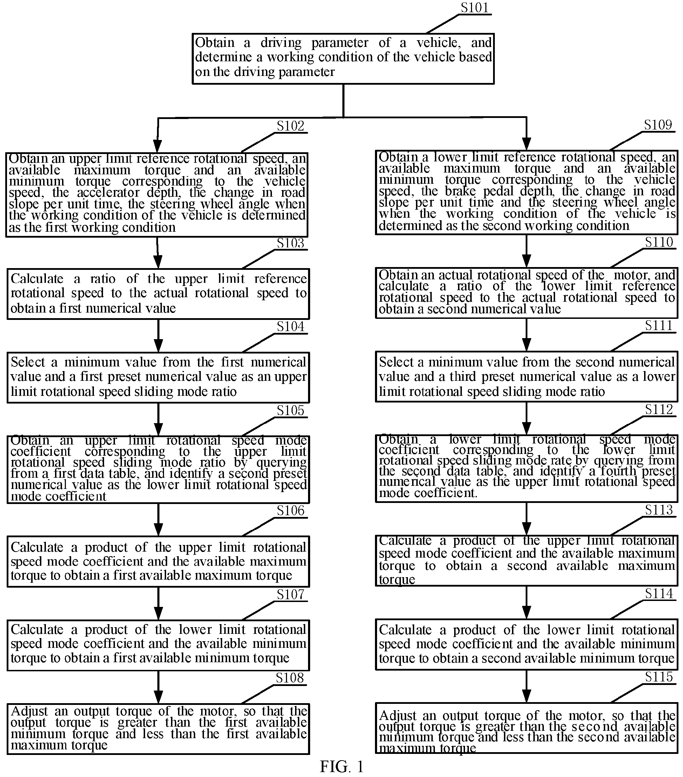

As shown in FIG. 1, FIG.1 is a schematic flowchart of a motor torque control method provided in the embodiment of the present application, including the following steps S101-S115.

In S101, a driving parameter of a vehicle is obtained, and a working condition of the vehicle is determined based on the driving parameter.

The driving parameter includes vehicle speed, change in road slope per unit time, accelerator depth, brake pedal depth, steering wheel angle, and actual speed of the motor.

When it is detected that the vehicle speed is greater than a preset vehicle speed threshold, the change in road slope per unit time is greater than a change in slope threshold, and the accelerator depth is greater than a first preset depth threshold, the working condition of the vehicle is determined as a first working condition.

In general, when the change in road slope per unit time is greater than the change in slope threshold, it indicates that the vehicle is traveling through an uneven road surface (including, but not limited to, a speed bump).

When it is detected that the vehicle speed is not greater than the preset vehicle speed threshold, the change in road slope per unit time is greater than the change in slope threshold, and the brake pedal depth is greater than a second preset depth threshold, the working condition of the vehicle is determined as a second working condition.

In the embodiment of the present application, the first working condition is configured to indicate that the vehicle accelerates through the uneven road surface, and the second working condition is configured to indicate that the vehicle decelerates through the uneven road surface.

In S102, when the working condition of the vehicle is determined as the first working condition, an upper limit reference rotational speed, an available maximum torque and an available minimum torque corresponding to the vehicle speed, the accelerator depth, the change in road slope per unit time, the steering wheel angle are obtained.

The upper limit reference rotational speed is the upper limit of the reference rotational speed of the motor. The available maximum torque is the maximum torque currently available to the motor. The available minimum torque is the minimum torque currently available to the motor.

In S103, a ratio of the upper limit reference rotational speed to an actual rotational speed is calculated to obtain a first value.

In S104, a minimum value is selected from the first value and the first preset value as the upper limit rotational speed sliding mode rate.

The first preset value may specifically be set to 1.

In S105, an upper limit rotational speed mode coefficient corresponding to the upper limit rotational speed sliding mode ratio is obtained by querying from a first data table, and the second preset value is identified as a lower limit rotational speed mode coefficient.

The second preset value may specifically be set to 1.

Specifically, the first data table may be referred to table 1 below.

**Table 1**

| | | | | | | | | | |
|---|---|---|---|---|---|---|---|---|---|
| upper limit rotational speed sliding mode rate | 0 | 0.3 | 0.4 | 0.5 | 0.6 | 0.7 | 0.8 | 0.9 | 1 |
| upper limit rotational speed mode coefficient | 0.2 | 0.2 | 0.2 | 0.2 | 0.2 | 0.4 | 0.6 | 0.8 | 1 |

It should be noted that the content shown in Table 1 is only for illustration.

In S106, a product of the available maximum torque and the upper limit rotational speed mode coefficient is calculated to obtain a first available maximum torque.

In S107, a product of the available minimum torque and the lower limit speed mode coefficient is calculated to obtain a first available minimum torque.

In S108, an output torque of the motor is adjusted, so that the output torque is greater than the first available minimum torque and less than the first available maximum torque.

When the vehicle accelerates through the uneven road surface, the output torque of the motor is adjusted, so that the output torque is greater than the first available minimum torque and less than the first available maximum torque, which can actively narrow the change range of the rotational speed of the motor, effectively eliminate torque fluctuations of the motor, and avoid abnormal noises from the mechanical structure connected to the motor.

In S109, when the working condition of the vehicle is determined as the second working condition, a lower limit reference rotational speed, an available maximum torque and an available minimum torque corresponding to the vehicle speed, the brake pedal depth, the change in road slope per unit time and the steering wheel angle are obtained.

The lower limit reference rotational speed is the lower limit of the reference rotational speed of the motor.

In S110, an actual rotational speed of the motor is obtained, and a ratio of the lower limit reference rotational speed to the actual rotational speed is calculated to obtain a second value.

In S111, a minimum value is selected from the second value and a third preset value as the lower limit speed sliding mode rate.

The third preset value may specifically be set to 1.

In S 112, a lower limit rotational speed mode coefficient corresponding to the lower limit rotational speed sliding mode ratio is obtained by querying from a second data table, and the fourth preset value is identified as the upper limit rotational speed mode coefficient.

The fourth preset value may specifically be set to 1.

Specifically, the second data table can be referred to table 2 below.

**Table 2**

| | | | | | | | | | |
|---|---|---|---|---|---|---|---|---|---|
| lower limit rotational speed sliding mode ratio | 0 | 0.3 | 0.4 | 0.5 | 0.6 | 0.7 | 0.8 | 0.9 | 1 |
| lower limit rotational speed mode coefficient | 0 | 0 | 0.1 | 0.2 | 0.3 | 0.4 | 0.6 | 0.8 | 1 |

It should be noted that the content shown in the above table 2 is only for illustration.

In S 113, a product of the available maximum torque and the upper limit rotational speed mode coefficient is calculated to obtain the second available maximum torque.

In S 114, a product of the available minimum torque and the lower limit rotational speed mode coefficient is calculated to obtain a second available minimum torque.

In S 115, the output torque of the motor is adjusted, so that the output torque is greater than the second available minimum torque and less than the second available maximum torque.

When the vehicle decelerates through the uneven road surface, the output torque of the motor is adjusted, so that the output torque is greater than the second available minimum torque and less than the second available maximum torque, which can effectively eliminate torque fluctuations of the motor, and avoid abnormal noises from the mechanical structure connected to the motor.

In this embodiment, when the working condition of the vehicle is determined to indicate that the vehicle passes through an uneven road surface, the upper limit rotational speed mode coefficient and the lower limit rotational speed mode coefficient of the vehicle are determined based on the driving parameter of the vehicle, the available maximum torque is corrected based on the upper limit rotational speed mode coefficient to obtain a target available maximum torque (the above first available maximum torque and the second available maximum torque are specific expressions of the target available maximum torque), the available minimum torque is corrected based on to the lower limit rotational speed mode coefficient to obtain a target available minimum torque (the above first available minimum torque and the second available minimum torque are specific expressions of the target available minimum torque), and finally the output torque of the motor is adjusted based on the target available maximum torque and the target available minimum torque, which effectively eliminates torque fluctuations of the motor, and avoids abnormal noises from the mechanical structure connected to the motor. It can be seen that the solution in this embodiment can effectively avoid abnormal noises when the new energy vehicle travels through an uneven road surface, and improve the riding experience of users.

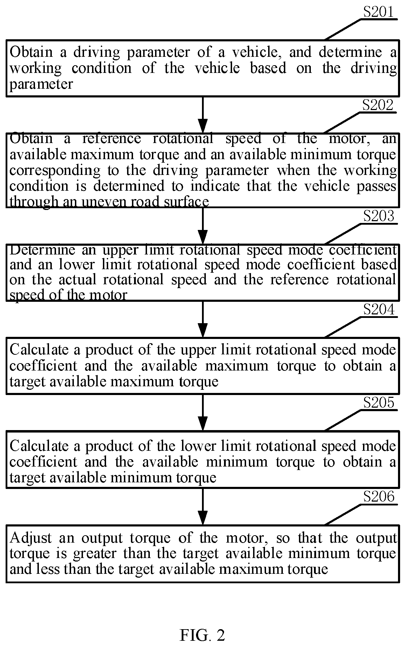

It should be noted that S108 in the above embodiment is an optional implementation of the motor torque control method in this application. In addition, S 115 in the above embodiment is also an optional implementation of the motor torque control method in this application. To this end, the processes in the above embodiment can be summarized as the method shown in FIG. 2 .

As shown in FIG. 2, FIG.2 is a schematic flowchart of another motor torque control method provided in the embodiment of the present application, which includes S201-S206.

In S201, a driving parameter of a vehicle is obtained, and a working condition of the vehicle is determined based on the driving parameter.

The driving parameter includes an actual rotational speed of a motor.

In S202, a reference rotational speed, an available maximum torque and an available minimum torque of the motor corresponding to the driving parameter are obtained when the working condition is determined to indicate that the vehicle passes through an uneven road surface.

In S203, an upper limit rotational speed mode coefficient and a lower limit rotational speed mode coefficient are determined based on the actual rotational speed and the reference rotational speed of the motor.

In S204, a product of the upper limit rotational speed mode coefficient and the available maximum torque is calculated to obtain a target available maximum torque.

In S205, a product of the lower limit speed mode coefficient and the available minimum torque is calculated to obtain a target available minimum torque.

In S206, an output torque of the motor is adjusted, so that the output torque is greater than the target available minimum torque and less than the target available maximum torque.

In this embodiment, when the working condition of the vehicle is determined to indicate that the vehicle passes through an uneven road surface, the output torque of the motor is adjusted, so that the output torque is greater than the second available minimum torque and less than the second available maximum torque, which can effectively eliminate torque fluctuations of the motor, and avoid abnormal noises from the mechanical structure connected to the motor. It can be seen that the solution in this embodiment can effectively avoid abnormal noises when the new energy vehicle travels through an uneven road surface, and improve the riding experience of users.

Corresponding to the motor torque control method provided in the above embodiment of the present application, an embodiment of the present application further provides a motor torque control apparatus.

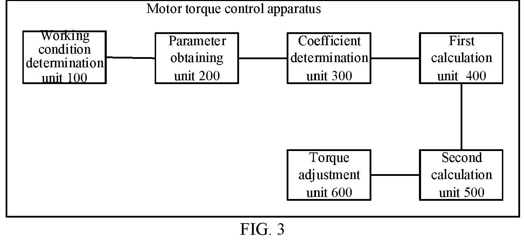

As shown in FIG. 3, FIG.3 is a schematic structural diagram of a motor torque control apparatus provided in the embodiment of the present application, which includes a working condition determination unit 100, a parameter obtaining unit 200, a coefficient determination unit 300, a first calculation unit 400, a second calculation unit 500 and a torque adjustment unit 600.

The working condition determination unit 100 is configured for obtaining a driving parameter of a vehicle, and determining a working condition of the vehicle based on the driving parameter. The driving parameter includes an actual rotational speed of a motor.

The driving parameter further includes vehicle speed, change in road slope per unit time, accelerator depth, brake pedal depth, steering wheel angle. The working condition includes a first working condition and a second working condition. The first working condition is configured to indicate that the vehicle accelerates through an uneven road surface, and the second working condition is configured to indicate that the vehicle decelerates through an uneven road surface.

The working condition determination unit 100 is configured for determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

The parameter acquisition unit 200 is configured for obtaining a reference rotational speed, an available maximum torque and an available minimum torque of the motor corresponding to the driving parameter when the working condition is determined to indicate that the vehicle passes through an uneven road surface.

The reference rotational speed of the motor includes an upper limit reference rotational speed and a lower limit reference rotational speed.

The parameter obtaining unit 200 is configured for obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

The coefficient determination unit 300 is configured for determining an upper limit rotational speed mode coefficient and an lower limit rotational speed mode coefficient based on the actual rotational speed and the reference rotational speed of the motor.

The coefficient determination unit 300 is specifically configured for calculating a ratio of the upper limit reference rotational speed to the actual rotational speed to obtain a first numerical value when the working condition is determined as the first working condition; selecting a minimum value from the first numerical value and a first preset numerical value as an upper limit rotational speed sliding mode ratio; obtaining the upper limit rotational speed mode coefficient corresponding to the upper limit rotational speed sliding mode ratio by querying from a first data table, and identifying a second preset numerical value as the lower limit rotational speed mode coefficient.

The coefficient determination unit 300 is specifically configured for calculating a ratio of the lower limit reference rotational speed to the actual rotational speed to obtain a second numerical value when the working condition is determined as the second working condition; selecting a minimum value from the second numerical value and a third preset numerical value as the lower limit rotational speed sliding mode ratio; obtainging the lower limit rotational speed mode coefficient corresponding to the lower limit rotational speed sliding mode rate by querying from the second data table, and identifying a fourth preset numerical value as the upper limit rotational speed mode coefficient.

The first calculation unit 400 is configured for calculating a product of the upper limit rotational speed mode coefficient and the available maximum torque to obtain a target available maximum torque.

The second calculation unit 500 is configured for calculating a product of the lower limit rotational speed mode coefficient and the available minimum torque to obtain a target available minimum torque.

The torque adjustment unit 600 is configured for adjusting an output torque of the motor so that the output torque is greater than the target available minimum torque and less than the target available maximum torque.

In this embodiment, when the working condition of the vehicle is determined to indicate that the vehicle passes through an uneven road surface, the output torque of the motor is adjusted based on the driving parameter, so that the output torque is greater than the second available minimum torque and less than the second available maximum torque, which can effectively eliminate torque fluctuations of the motor, and avoid abnormal noises from the mechanical structure connected to the motor. It can be seen that the solution in this embodiment can effectively avoid abnormal noises when the new energy vehicle travels through an uneven road surface, and improve the riding experience of users.

The present application also provides a computer-readable storage medium, the computer-readable storage medium includes a stored program, where the program implements the above motor torque control method provided in the present application.

The present application further provides a motor controller including a processor, a memory and a bus. The processor and the memory are connected through a bus, the memory is configured for storing a program, and the processor is configured for executing the program. The program, when run, implements the motor torque control method provided in the present application, and the control method includes:
obtaining a driving parameter of a vehicle, and determining a working condition of the vehicle based on the driving parameter, where the driving parameter includes an actual rotational speed of a motor;
obtaining a reference rotational speed, an available maximum torque and an available minimum torque of the motor corresponding to the driving parameter when the working condition is determined to indicate that the vehicle passes through an uneven road surface;
determining an upper limit rotational speed mode coefficient and a lower limit rotational speed mode coefficient based on the actual rotational speed and the reference rotational speed of the motor;
calculating a product of the upper limit rotational speed mode coefficient and the available maximum torque to obtain a target available maximum torque;
calculating a product of the lower limit speed mode coefficient and the available minimum torque is calculated to obtain a target available minimum torque; and
adjusting an output torque of the motor, so that the output torque is greater than the target available minimum torque and less than the target available maximum torque.

Specifically, based on the above embodiments, the driving parameter further includes vehicle speed, change in road slope per unit time, accelerator depth, brake pedal depth, steering wheel angle. The working condition includes a first working condition and a second working condition. The first working condition is configured to indicate that the vehicle accelerates through an uneven road surface, and the second working condition is configured to indicate that the vehicle decelerates through an uneven road surface.

The determining the working condition of the vehicle based on the driving parameter includes:
determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or
determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

Specifically, based on the above embodiments, the reference rotational speed of the motor includes an upper limit reference rotational speed and a lower limit reference rotational speed.

The obtaining the reference rotational speed, the available maximum torque and the available minimum torque of the motor corresponding to the driving parameter when the working condition is determined to indicate that the vehicle passes through an uneven road surface includes:
obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or
obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

Specifically, based on the above embodiments, the determining the upper limit rotational speed mode coefficient and the lower limit rotational speed mode coefficient based on the actual rotational speed and the reference rotational speed of the motor includes:
calculating a ratio of the upper limit reference rotational speed to the actual rotational speed to obtain a first numerical value when the working condition is determined as the first working condition;
selecting a minimum value from the first numerical value and a first preset numerical value as an upper limit rotational speed sliding mode ratio;
obtaining an upper limit rotational speed mode coefficient corresponding to the upper limit rotational speed sliding mode ratio by querying from a first data table, and identifying a second preset numerical value as the lower limit rotational speed mode coefficient.

Specifically, based on the above embodiments, the determining the upper limit rotational speed mode coefficient and the lower limit rotational speed mode coefficient based on the actual rotational speed and the reference rotational speed of the motor includes:
calculating a ratio of the lower limit reference rotational speed to the actual rotational speed to obtain a second numerical value when the working condition is determined as the second working condition;
selecting a minimum value from the second numerical value and a third preset numerical value as a lower limit rotational speed sliding mode ratio; and
obtaining the lower limit rotational speed mode coefficient corresponding to the lower limit rotational speed sliding mode rate by querying from the second data table, and identifying a fourth preset numerical value as the upper limit rotational speed mode coefficient.

The functions described in the methods of the embodiments of the present application may be stored in a computing device-readable storage medium when implemented as a software functional unit and sold or used as a seperate product. Based on this understanding, the part of the embodiments of the present application that contributes to the prior art or the part of the technical solution may be embodied in the form of a software product stored in a storage medium and including a number of instructions for causing a computing device (which may be a personal computer, a server, a mobile computing device or a network device, etc.) to carry out all or part of the steps of the methods described in the various embodiments of the present application. The aforementioned storage medium includes: USB flash drive, portable hard disk, read-only memory (ROM), random access memory (RAM), magnetic disk or optical disk and other types of media that can store program codes.

Each embodiment in this specification is described in a progressive manner, each embodiment focuses on the difference from other embodiments, and the same and similar parts of each embodiment can be referred to each other.

The above description of the disclosed embodiments enables those skilled in the art to implement or use the present application. Various modifications to these embodiments will be readily apparent to those skilled in the art, and the general principles defined herein may be implemented in other embodiments without departing from the spirit or scope of the application. Therefore, the present application will not be limited to the embodiments shown herein, but is to conform to the widest scope consistent with the principles and novel features disclosed herein.

## Claims

1. A motor torque control method, comprising:
obtaining a driving parameter of a vehicle, and determining a working condition of the vehicle based on the driving parameter, wherein the driving parameter comprises an actual rotational speed of a motor;
obtaining a reference rotational speed, an available maximum torque and an available minimum torque of the motor corresponding to the driving parameter when the working condition is determined to indicate that the vehicle passes through an uneven road surface;
determining an upper limit rotational speed mode coefficient and an lower limit rotational speed mode coefficient based on the actual rotational speed and the reference rotational speed of the motor;
calculating a product of the upper limit rotational speed mode coefficient and the available maximum torque to obtain a target available maximum torque;
calculating a product of the lower limit rotational speed mode coefficient and the available minimum torque to obtain a target available minimum torque ; and
adjusting an output torque of the motor, so that the output torque is greater than the target available minimum torque and less than the target available maximum torque.

2. The method according to claim 1, wherein the driving parameter further comprises a vehicle speed, a change in road slope per unit time, an accelerator depth, a brake pedal depth, and a steering wheel angle, the working condition comprises a first working condition and a second working condition, the first working condition is configured to indicate that the vehicle accelerates through an uneven road surface, and the second working condition is configured to indicate that the vehicle decelerates through an uneven road surface, and
the determining the working condition of the vehicle based on the driving parameter comprises:
determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or
determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

3. The method according to claim 2, wherein the reference rotational speed of the motor comprises an upper limit reference rotational speed and a lower limit reference rotational speed, and
the obtaining the reference rotational speed, the available maximum torque and the available minimum torque of the motor corresponding to the driving parameter when the working condition is determined to indicate that the vehicle passes through an uneven road surface, comprises:
obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or
obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

4. The method according to claim 3, wherein the determining the upper limit rotational speed mode coefficient and the lower limit rotational speed mode coefficient based on the actual rotational speed and the reference rotational speed of the motor comprises:
calculating a ratio of the upper limit reference rotational speed to the actual rotational speed to obtain a first numerical value when the working condition is determined as the first working condition;
selecting a minimum value from the first numerical value and a first preset numerical value as an upper limit rotational speed sliding mode ratio; and
obtaining an upper limit rotational speed mode coefficient corresponding to the upper limit rotational speed sliding mode ratio by querying from a first data table, and identifying a second preset numerical value as the lower limit rotational speed mode coefficient.

5. The method according to claim 3, wherein the determining the upper limit rotational speed mode coefficient and the lower limit rotational speed mode coefficient based on the actual rotational speed and the reference rotational speed of the motor comprises:
calculating a ratio of the lower limit reference rotational speed to the actual rotational speed to obtain a second numerical value when the working condition is determined as the second working condition;
selecting a minimum value from the second numerical value and a third preset numerical value as a lower limit rotational speed sliding mode ratio; and
obtaining a lower limit rotational speed mode coefficient corresponding to the lower limit rotational speed sliding mode rate by querying from the second data table, and identifying a fourth preset numerical value as the upper limit rotational speed mode coefficient.

6. A motor torque control apparatus, comprising:
a working condition determination unit configured for obtaining a driving parameter of a vehicle, and determining a working condition of the vehicle based on the driving parameter, wherein the driving parameter include an actual rotational speed of a motor;
a parameter obtaining unit configured to obtaining a reference rotational speed, an available maximum torque and an available minimum torque of the motor corresponding to the driving parameter when the working condition is determined to indicate that the vehicle passes through an uneven road surface;
a coefficient determination unit configured for determining an upper limit rotational speed mode coefficient and an lower limit rotational speed mode coefficient based on the actual rotational speed and the reference rotational speed of the motor;
a first calculation unit configured for calculating a product of the upper limit rotational speed mode coefficient and the available maximum torque to obtain a target available maximum torque;
a second calculation unit configured for calculating a product of the lower limit rotational speed mode coefficient and the available minimum torque to obtain a target available minimum torque; and
a torque adjustment unit configured for adjusting an output torque of the motor so that the output torque is greater than the target available minimum torque and less than the target available maximum torque.

7. The apparatus according to claim 6, wherein the driving parameter further comprises a vehicle speed, a change in road slope per unit time, an accelerator depth, a brake pedal depth, and a steering wheel angle, the working condition comprises a first working condition and a second working condition, the first working condition is configured to indicate that the vehicle accelerates through an uneven road surface, and the second working condition is configured to indicate that the vehicle decelerates through an uneven road surface, and
the working condition determination unit is further configured for:
determining the working condition of the vehicle as a first working condition when it is detected that the vehicle speed is greater than a preset vehicle speed threshold, the change in road slope per unit time is greater than a change in slope threshold, and the accelerator depth is greater than a first preset depth threshold; or
determining the working condition of the vehicle as a second working condition when it is detected that the vehicle speed is not greater than the preset vehicle speed threshold, the change in road slope per unit time is greater than the change in slope threshold, and the brake pedal depth is greater than a second preset depth threshold.

8. The apparatus according to claim 7, wherein the reference rotational speed of the motor comprises an upper limit reference rotational speed and a lower limit reference rotational speed, and
the parameter obtaining unit is further configured for:
obtaining an upper limit reference rotational speed, an available maximum torque and an available minimum torque corresponding to the vehicle speed, the accelerator depth, the change in road slope per unit time, the steering wheel angle when the working condition of the vehicle is determined as the first working condition, or
obtaining a lower limit reference rotational speed, an available maximum torque and an available minimum torque corresponding to the vehicle speed, the brake pedal depth, the change in road slope per unit time and the steering wheel angle when the working condition of the vehicle is determined as the second working condition.

9. A computer-readable storage medium, comprising a stored program, wherein the program implements the motor torque control method according to any one of claims 1-5.

10. A motor controller, comprising a processor, a memory and a bus, wherein the processor is connected to the memory through the bus;
the memory is configured for storing a program, the processor is configured for running the program, and the program, when run, implements the motor torque control method according to any one of claims 1-5.
